# FASCICULE DE BREVET EUROPEEN

(11) **EP 1 303 061 B1**
(45) Date de publication et mention de la délivrance du brevet: **08.07.2009**
(21) Numéro de dépôt: 02292516.8
(22) Date de dépôt: 11.10.2002
(51) Int. Cl.: H04B 7/12, H04B 1/04, H04L 1/04

(54) **Système de télécommunication à faible rayonnement électromagnétique non-essentiel**
Telekommunikationssystem mit niedriger parasitärer elektromagnetischer Strahlung
Telecommunication system with low spurious electromagnetic radiations

(30) Priorité: 15.10.2001 FR 0113244
(43) Date de publication de la demande: 16.04.2003
(73) Titulaire: DELTA DORE Société Anonyme, F-35270 Combourg (FR)
(72) Inventeur: Chouanne, Philippe, 35740 Pace (FR)
(74) Mandataire: Maillet, Alain

(56) Documents cités:
- EP-A- 0 708 543
- DE-A- 19 516 063

## Description

La présente invention concerne un système de télécommunication incluant au moins un émetteur et au moins un récepteur respectivement destinés à émettre et à recevoir des données transmises sur au moins une première et une deuxième fréquence porteuse associées à des premier et deuxième canaux de transmission.

De tels systèmes sont utilisés pour transmettre des informations avec un haut degré de fiabilité, car il n'existe qu'une faible probabilité pour que les deux canaux de transmission associés aux première et deuxième fréquences porteuses soient simultanément brouillés ou rendus impraticables, par exemple par des obstacles physiques. Un tel haut degré de fiabilité est souvent recherché dans des applications de transmission de signaux d'alarme ou de signaux destinés à piloter des appareils de forte puissance, comme des chaudières ou des moteurs électriques.

Une transmission simultanée d'un même flux de données sur deux fréquences porteuses différentes pose des problèmes de compatibilité avec des normes visant à prévenir des émissions électromagnétiques non-essentielles, comme la norme ETSI EN 300 220. En effet, des signaux émis sur deux fréquences porteuses distinctes vont immanquablement générer des produits d'intermodulation, qui sont des signaux ayant pour fréquence une combinaison linéaire desdites fréquences porteuses. En particulier, un produit d'intermodulation du deuxième ordre ayant pour fréquence une différence entre les deuxième et première fréquences porteuses présente une amplitude suffisamment significative pour être incompatible avec les exigences de la norme précitée.

Le document EP 0 370 862 B1 présente une solution à ce problème, qui consiste à créer des premier et deuxième signaux intermédiaires complémentaires entre eux et respectivement représentatifs de deux niveaux constituant le flux de données à transmettre, qui est donc nécessairement de nature binaire. La transmission du flux est alors effectuée de manière alternative sur les première et deuxième fréquences porteuses, ce qui évite la formation de produits d'intermodulation.

Une telle solution nécessite toutefois la mise en oeuvre d'une structure complexe pour identifier des niveaux logiques "0" et "1" dans le flux de données à transmettre et générer des signaux intermédiaires correspondants, si la nature desdites données n'est pas parfaitement binaire, ce qui est souvent le cas en pratique. De plus, si une erreur est commise lors d'une telle identification, cette erreur affectera les deux signaux intermédiaires qui sont par nécessité complémentaires l'un de l'autre, et ne générera pas d'incohérence entre les signaux transmis sur les première et deuxième fréquences porteuses, incohérence qui aurait toutefois pu stigmatiser une telle erreur et déclencher sa correction. Une telle interdépendance des signaux intermédiaires nuit à la fiabilité de la transmission opérée par le système connu.

La présente invention a pour but de remédier dans une large mesure aux inconvénients évoqués plus haut en proposant un système de télécommunication apte à transmettre un flux de données numériques ou analogiques, qui ne requiert pas la création de signaux intermédiaires représentatifs dudit flux pour effectuer la transmission, tout en étant conforme aux exigences de normes proscrivant des émissions électromagnétiques non-essentielles.

En effet, selon l'invention, un système de télécommunication conforme au paragraphe introductif inclut des moyens pour transmettre un même flux de données simultanément sur les première et deuxième fréquences porteuses, les valeurs desdites fréquences porteuses étant telles qu'une valeur absolue d'une différence entre les première et deuxième fréquences porteuses soit incluse dans une bande de fréquences définissant l'un des premier ou deuxième canaux de transmission.

Dans le système selon l'invention, la transmission simultanée du flux de données sur les deux canaux associés aux première et deuxième fréquences porteuses provoque la génération d'un produit d'intermodulation du deuxième ordre ayant une fréquence égale à la différence entre lesdites fréquences porteuses. Cependant, du fait de la relation particulière existant selon l'invention entre les première et deuxième fréquences porteuses, ledit produit d'intermodulation sera inclus dans l'un des canaux de transmission du système de télécommunication, lequel ne génèrera donc pas de rayonnement électromagnétique non-essentiel.

Par ailleurs, le flux de données à transmettre étant directement transmis sur les première et deuxième fréquences porteuses, sans création de signaux intermédiaires, la probabilité pour qu'une erreur de transmission se produise est réduite par rapport au système connu. De plus, les signaux transmis sur les deux canaux sont réellement indépendants l'un de l'autre et pourront présenter des incohérences et signaler ainsi des erreurs de transmission qu'il sera alors possible de corriger, ce qui contribue à conférer un haut de degré de fiabilité aux transmissions opérées par le système conforme à l'invention

Dans un mode de mise en oeuvre particulièrement avantageux de l'invention, l'une des fréquences porteuses, par exemple la deuxième fréquence porteuse, aura une valeur nominale double de l'autre fréquence porteuse, dans cet exemple la première fréquence porteuse.

Le rapport de valeur deux existant entre les valeurs nominales des deuxième et première fréquences porteuses assure théoriquement que les produits d'intermodulation les plus significatifs générés par les signaux émis sur les signaux émis sur les première et deuxième fréquences porteuses auront des fréquences égales auxdites première et deuxième fréquences porteuses. Ces produits d'intermodulation se confondront donc avec les signaux véhiculés par les première et deuxième fréquences porteuses et seront alors inoffensifs. En cas de dispersion des valeurs réelles des première et deuxième fréquences porteuses par rapport à leurs valeurs nominales, qui pourra être causée par des imperfections d'éléments physiques choisis pour générer lesdites fréquences porteuses, le rapport de valeur deux existant selon l'invention entre les valeurs nominales des deuxième et première fréquences porteuses assure que les produits d'intermodulation les plus significatifs générés par les signaux véhiculés par les première et deuxième fréquences porteuses soient à tout le moins inclus dans les premier et deuxième canaux de transmission.

Dans un mode de réalisation de l'invention, l'émetteur inclut un premier et un deuxième oscillateur local, destinés à produire des premier et deuxième signaux de sortie ayant des fréquences d'oscillation égales aux première et deuxième fréquences porteuses, respectivement.

Dans un mode de réalisation particulier de l'invention, l'émetteur inclut un unique oscillateur local destiné à produire un premier signal de sortie ayant une fréquence d'oscillation égale à la première fréquence porteuse, et un multiplieur de fréquence destiné à produire, à partir du premier signal de sortie, un deuxième signal de sortie ayant une fréquence d'oscillation égale à la deuxième fréquence porteuse.

Un tel mode de réalisation permet de faire l'économie d'un oscillateur local, qui est un élément coûteux à produire et à mettre en oeuvre. De plus, ce mode de réalisation permet d'éviter d'avoir à régler séparément de manière précise les fréquences d'oscillation de deux oscillateurs distincts afin d'assurer que l'une soit le double de l'autre, ce résultat étant obtenu de manière transparente et systématique grâce au multiplieur de fréquence.

Le multiplieur de fréquence pourra par exemple consister en un mélangeur destiné à multiplier par lui-même le premier signal de sortie si celui-ci est de forme sinusoïdale, afin de l'élever au carré et de produire ainsi une composante à fréquence double selon les lois de la trigonométrie. Ce mélangeur pourra être construit sur la base d'une ou plusieurs cellules de Gilbert.

Dans un autre mode de réalisation possible, le multiplieur de fréquence pourra inclure :
. un élément non-linéaire destiné à produire, à partir du premier signal de sortie, un signal intermédiaire présentant au moins une composante fondamentale ayant pour fréquence la première fréquence porteuse, et au moins une composante harmonique ayant une fréquence double de celle de la composante fondamentale, et
. des moyens de filtrage du signal intermédiaire, destinés à sélectionner, en vue de former le deuxième signal de sortie, ladite composante harmonique.
L'élément non-linéaire pourra être constitué par un amplificateur.

Dans une variante du mode de réalisation de l'invention décrit ci-dessus, l'émetteur inclut un diviseur de fréquence, destiné à produire un premier signal de sortie ayant une fréquence d'oscillation égale à la première fréquence porteuse, et un unique oscillateur local, disposé en amont dudit diviseur de fréquence, et destiné à produire un deuxième signal de sortie ayant une fréquence d'oscillation égale à la deuxième fréquence porteuse.

Cette variante permet également d'utiliser un unique oscillateur local pour générer des premier et deuxième signaux de sortie ayant pour fréquences d'oscillation les première et deuxième fréquences porteuses, avec les avantages précités liés à une telle unicité.

Dans un mode de réalisation avantageux de l'invention, l'émetteur inclut au moins une boucle à verrouillage de phase, destinée à réguler la fréquence d'oscillation d'au moins un signal de sortie d'au moins un oscillateur local.

L'utilisation d'une boucle à verrouillage de phase permet de contrôler avec précision la valeur et la constance de la fréquence d'oscillation d'un oscillateur local. Ce type de boucle autorise en outre le plus souvent un contrôle par voie logicielle, ce qui lui confère une grande flexibilité.

Dans un mode de réalisation préféré de l'invention, l'émetteur inclut un premier et un deuxième amplificateur, respectivement destinés à amplifier les premier et deuxième signaux de sortie, lesdits amplificateurs présentant un gain ayant une valeur réglable au moyen d'un signal contenant les données à transmettre.

Ce mode de réalisation permet de réaliser, de manière simple et peu coûteuse, une transmission simultanée des données sur les première et deuxième fréquences porteuses au moyen d'une modulation des premier et deuxième signaux de sortie par un signal contenant les données à transmettre, lequel signal pourra grâce à l'invention être indifféremment de nature analogique ou numérique.

D'une manière plus générale, l'invention concerne un procédé de transmission de données incluant une étape d'émission simultanée desdites données sur au moins une première et une deuxième fréquence porteuse associées à des premier et deuxième canaux de transmission, les valeurs des première et deuxième fréquences porteuses étant telles qu'une valeur absolue d'une différence entre lesdites fréquences porteuses soit incluse dans une bande de fréquences définissant l'un des premier ou deuxième canaux de transmission.

Dans un mode de mise en oeuvre particulièrement avantageux de ce procédé, la deuxième fréquence porteuse aura avantageusement une valeur nominale double de celle de la première fréquence porteuse.

L'invention concerne également un dispositif de communication par voie hertzienne destiné à émettre un même flux de données simultanément sur au moins une première et une deuxième fréquence porteuse associées à des premier et deuxième canaux de transmission, les valeurs des première et deuxième fréquences porteuses étant telles qu'une valeur absolue d'une différence entre les première et deuxième fréquences porteuses soit incluse dans une bande de fréquences définissant l'un des premier ou deuxième canaux de transmission.

L'invention concerne en outre un dispositif de communication par voie hertzienne destiné à recevoir un même flux de données simultanément transmis sur au moins une première et une deuxième fréquence porteuse associées à des premier et deuxième canaux de transmission, les valeurs des première et deuxième fréquences porteuses étant telles qu'une valeur absolue d'une différence entre les première et deuxième fréquences porteuses soit incluse dans une bande de fréquences définissant l'un des premier ou deuxième canaux de transmission.

Dans des modes de mise en oeuvre particulièrement avantageux de tels dispositifs, la deuxième fréquence porteuse aura une valeur nominale double de celle de la première fréquence porteuse.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est un schéma fonctionnel décrivant un système de télécommunication selon l'invention,
la Fig.2 est un schéma fonctionnel décrivant une variante d'un tel système de télécommunication,
la Fig.3 est un schéma fonctionnel décrivant un émetteur inclus dans de tels systèmes de télécommunication,
la Fig.4 est un schéma fonctionnel décrivant une boucle à verrouillage de phase pouvant être utilisée dans un tel émetteur,
la Fig.5 est un schéma fonctionnel décrivant un émetteur inclus dans un mode de réalisation particulier de l'invention,
les Figs.6a et 6b sont des schémas fonctionnels décrivant des modes de réalisation possibles d'un multiplieur de fréquence inclus dans un tel émetteur, et
la Fig.7 est un schéma fonctionnel décrivant un émetteur inclus clans une variante de ce mode de réalisation particulier de l'invention.

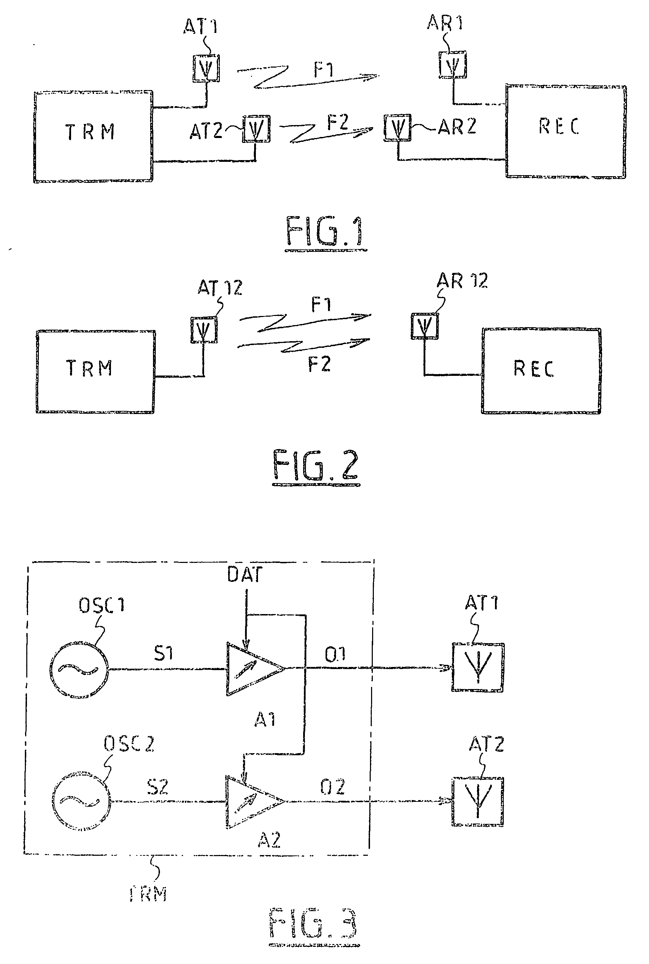

La Fig.1 représente schématiquement un système de télécommunication selon l'invention. Ce système inclut au moins un émetteur TRM et au moins un récepteur REC. Dans ce mode de réalisation, l'émetteur TRM et le récepteur REC sont tous deux munis d'un première antenne AT1 ou AR1 accordée sur une première fréquence porteuse F1 et d'une deuxième antenne AT2 ou AR2 accordée sur une deuxième fréquence porteuse F2. Les antennes AT1 et AT2 de l'émetteur TRM et les antennes AR1 et AR2 du récepteur REC sont respectivement destinées à émettre et à recevoir un même flux de données transmis simultanément sur les première et deuxième fréquences porteuses F1 et F2. Les première et deuxième fréquences porteuses sont associées à des premier et deuxième canaux de transmission. Le premier canal de transmission pourra par exemple couvrir une première bande de fréquences allant de 433,05 à 434,79 MHz, le deuxième canal de transmission couvrant quant à lui une deuxième bande de fréquences allant de 868 à 870 MHz. Selon un mode de mise en oeuvre particulier de l'invention, on choisira d'attribuer à la deuxième fréquence porteuse F2 une valeur nominale double de celle de la première fréquence porteuse, soit F2=2.F1, par exemple F1=434,175 MHz et F2=868,35 MHz. Ainsi, un produit d'intermodulation du deuxième ordre entre les signaux transmis sur les première et deuxième fréquences porteuses F1 et F2 aura une fréquence en principe égale à 434,175 MHz et sera donc confondu avec le signal véhiculé par la première fréquence porteuse F1. La largeur de bande de 1,74 MHz du premier canal de transmission autorise des déviations des valeurs réelles des première et deuxième fréquences porteuses F2 et F1 par rapport aux valeurs théoriques qui vérifient la relation F2=2.F1, en assurant que la fréquence d'un produit d'intermodulation généré par des signaux à de telles fréquences porteuses soit à tout le moins incluse dans la bande de fréquences [433,05 MHz ; 434,79 MHz] couverte par le premier canal de transmission, ce qui assure que le système de télécommunication selon l'invention ne génère pas de rayonnement électromagnétique significatif en dehors de ses canaux de transmission.

Par ailleurs, les signaux transmis sur les deux canaux sont rendus réellement indépendants l'un de l'autre grâce à la simultanéité de la transmission sur les deux fréquences porteuses F1 et F2 et pourront présenter des incohérences et signaler ainsi des erreurs de transmission qu'il sera alors possible de corriger, ce qui contribue à conférer un haut de degré de fiabilité aux transmissions opérées par le système conforme à l'invention.

La Fig.2 représente schématiquement une variante d'un tel système selon laquelle l'émetteur TRM est muni d'une antenne bi-bande AT12 et le récepteur est muni d'une antenne bi-bande AR12, lesquelles antennes sont respectivement aptes à émettre et à recevoir un même flux de données transmis simultanément sur les première et deuxième fréquences porteuses F1 et F2, la deuxième fréquence porteuse F2 ayant une valeur nominale double de celle de la première fréquence porteuse F1, soit F2=2.F1.
Cette variante permet, en divisant par deux le nombre d'antennes présentes dans le système de télécommunication, d'en réduire le coût de production et permet en outre une réduction de l'encombrement de l'émetteur TRM et du récepteur REC qui y sont mis en oeuvre.

La Fig.3 est un schéma fonctionnel partiel d'un émetteur TRM selon un mode de réalisation possible de l'invention. Cet émetteur TRM inclut un premier et un deuxième oscillateur local OSC1 et OSC2, destinés à produire des premier et deuxième signaux de sortie S1 et S2 ayant des fréquences d'oscillation égales aux première et deuxième fréquences porteuses F1 et F2, respectivement. L'émetteur TRM inclut en outre un premier et un deuxième amplificateur A1 et A2, respectivement destinés à amplifier les premier et deuxième signaux de sortie S1 et S2, lesdits amplificateurs A1 et A2 présentant un gain ayant une valeur réglable au moyen d'un signal de données DAT contenant les données à transmettre. Les premier et deuxième amplificateurs A1 et A2 sont respectivement destinés à fournir aux antennes AT1 et AT2 de l'émetteur TRM des signaux O1 et O2 ayant pour fréquences respectives les première et deuxième fréquences porteuses F1 et F2 et identiquement modulés en amplitude par le signal de données DAT, ce qui assure une transmission simultanée des données sur les deux fréquences porteuses. Dans un tel mode de réalisation, le signal de données DAT pourra être de nature analogique, provoquant alternativement et sans discontinuité des atténuations ou des amplifications des premier et deuxième signaux de sortie S1 et S2 des oscillateurs locaux OSC1 et OSC2. Le signal de données DAT pourra aussi être de nature numérique, réalisant alternativement et de manière discontinue une amplification ou une annulation, selon que ledit signal DAT présente un niveau logique "1" ou un niveau logique "0", des premier et deuxième signaux de sortie S1 et S2 des oscillateurs locaux OSC1 et OSC2, selon une technique connue sous le sigle OOK (de l'anglais "On/Off Keying"). Il apparaît clairement de la description de ce mode de réalisation que le flux de données contenu dans le signal de données DAT étant directement transmis via la modulation d'amplitude opérée sur les première et deuxième fréquences porteuses F1 et F2, les signaux transmis sur les deux canaux associés sont réellement indépendants l'un de l'autre et offriront une réelle redondance garante d'un haut de degré de fiabilité, en ce sens que lesdits signaux pourront présenter entre eux des incohérences et signaler ainsi des erreurs de transmission.

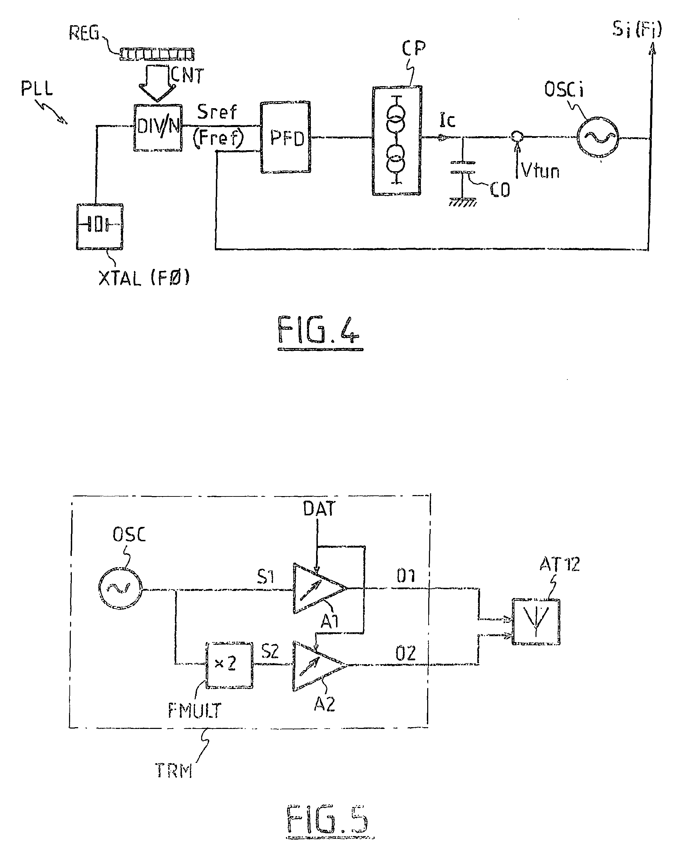

La Fig.4 illustre un mode de réalisation d'une boucle à verrouillage de phase PLL qui sera avantageusement mise en oeuvre pour réguler la fréquence d'oscillation d'un oscillateur local OSCi inclus dans l'émetteur décrit ci-dessus. Cette boucle à verrouillage de phase PLL inclut :
. un détecteur de phase/fréquence PFD destiné à recevoir un signal de référence Sref ayant une fréquence de référence Fref et le signal de sortie Si de l'oscillateur OSCi ayant une fréquence d'oscillation Fi,
. une pompe de charge CP destinée à produire un courant de sortie Ic positif ou négatif selon que le détecteur de phase/fréquence mesure un écart positif ou négatif entre la fréquence Fref du signal de référence Sref et la fréquence Fi du signal de sortie Si de l'oscillateur OSCi, et
. un élément capacitif C0 destiné à produire, sous l'effet du courant de sortie IC de la pompe de charge CP, une tension de réglage Vtun appliquée à une entrée de réglage de l'oscillateur OSCi.
La tension de réglage Vtun pourra par exemple être exploitée au sein de l'oscillateur local OSCi pour polariser une diode varicap incluse dans un circuit résonnant formant partie dudit oscillateur.

Dans l'exemple décrit ici, le signal de référence est produit par un oscillateur XTAL ayant une fréquence d'oscillation F0 bien connue et maîtrisée comme un oscillateur à quartz, en aval duquel est disposé un diviseur de fréquence DIV/N présentant un rapport de division de valeur N programmable au moyen d'un mot de contrôle CNT mémorisé dans un registre REG.

Lorsque la fréquence Fi est inférieure à la fréquence Fref=F0/N, le détecteur de phase/fréquence PFD commande à la pompe de charge CP d'injecter un courant Ic dans l'élément capacitif C0, provoquant ainsi une augmentation de la valeur de la tension de réglage Vtun et de la fréquence d'oscillation Fi. Inversement, lorsque la fréquence Fi est supérieure à la fréquence Fref=F0/N, le détecteur de phase/fréquence commande à la pompe de charge CP de soustraire un courant Ic depuis l'élément capacitif C0, provoquant ainsi une diminution de la valeur de la tension de réglage Vtun et de la fréquence d'oscillation Fi. La valeur de ladite fréquence d'oscillation est ainsi régulée à la valeur Fi=F0/N, et programmable par voie logicielle au moyen d'un simple changement de la valeur du mot de contrôle CNT mémorisé dans le registre REG.

La Fig.5 est un schéma fonctionnel partiel d'un émetteur TRM inclus dans un système de télécommunication conforme à un mode de réalisation particulièrement avantageux de l'invention. Cet émetteur TRM inclut un unique oscillateur local OSC destiné à produire un premier signal de sortie S1 ayant une fréquence d'oscillation égale à la première fréquence porteuse F1, et un multiplieur de fréquence FMULT destiné à produire, à partir du premier signal de sortie S1, un deuxième signal de sortie S2 ayant une fréquence d'oscillation égale à la deuxième fréquence porteuse F2. L'émetteur TRM inclut en outre un premier et un deuxième amplificateur A1 et A2, respectivement destinés à amplifier les premier et deuxième signaux de sortie S1 et S2, lesdits amplificateurs A1 et A2 présentant un gain ayant une valeur réglable au moyen d'un signal de données DAT contenant les données à transmettre. Les premier et deuxième amplificateurs A1 et A2 sont respectivement destinés à fournir à une unique antenne bi-bande AT12 de l'émetteur TRM des signaux O1 et O2 ayant pour fréquences respectives les première et deuxième fréquences porteuses F1 et F2.

L'unicité de l'oscillateur local OSC et de l'antenne AT12 permet de réduire les coûts de fabrication de l'émetteur TRM. De plus, ce mode de réalisation permet d'éviter d'avoir à régler séparément de manière précise les fréquences d'oscillation F1 et F2 de deux oscillateurs distincts afin d'assurer que l'une soit le double de l'autre (F2=2.F1), ce résultat étant obtenu de manière transparente et systématique grâce au multiplieur de fréquence FMULT.

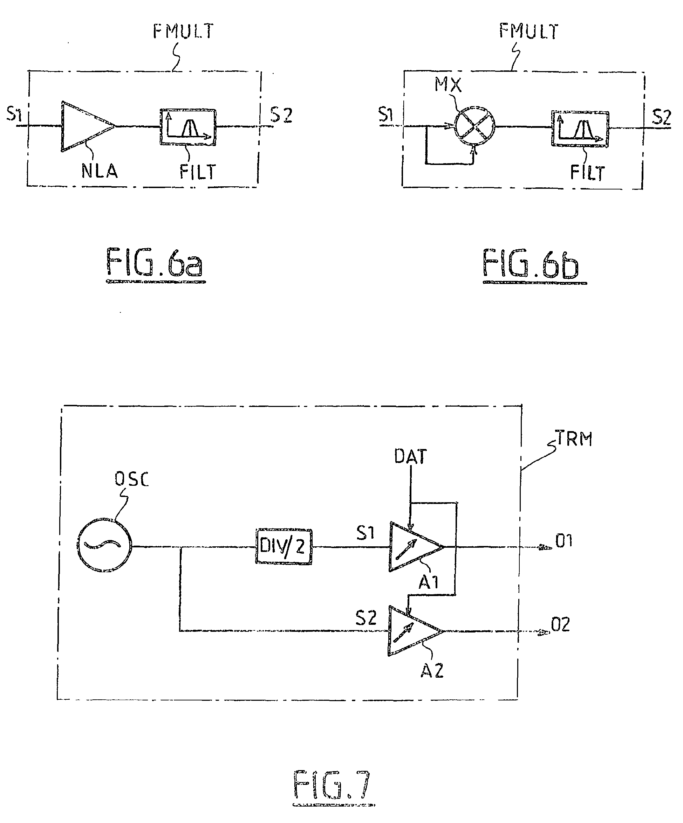

Les Figs.6a et 6b illustrent deux modes de réalisation possibles d'un tel multiplieur de fréquence FMULT. Le multiplieur FMULT de la Fig.6a inclut un amplificateur NLA présentant une caractéristique de transfert non-linéaire. Un tel défaut de linéarité conduit l'amplificateur NLA à produire un signal de sortie présentant une composante fondamentale résultant de l'amplification de son signal d'entrée S1 ayant pour fréquence la première fréquence porteuse F1, et au moins une composante harmonique du deuxième ordre ayant une fréquence F2 double de celle de la composante fondamentale F1. Le multiplieur FMULT inclut en outre des moyens de filtrage FILT du signal intermédiaire, par exemple un filtre passe-bande ayant un gabarit centré sur la valeur de la deuxième fréquence porteuse F2, destiné à sélectionner, en vue de former le deuxième signal de sortie S2, ladite composante harmonique.
Le multiplieur FMULT de la Fig.6b inclut un mélangeur MX, destiné à recevoir en entrée et à multiplier par lui-même le premier signal de sortie S1, afin de l'élever au carré et de produire ainsi un signal de sortie ayant une composante à fréquence double de celle de son signal d'entrée selon les lois de la trigonométrie, dans l'hypothèse ou le premier signal de sortie S1 est de forme sinusoïdale. Le mélangeur MX pourra être construit sur la base d'une ou plusieurs cellules de Gilbert. Ce multiplieur FMULT inclut en outre des moyens de filtrage FILT du signal intermédiaire, par exemple un filtre passe-bande ayant un gabarit centré sur la valeur de la deuxième fréquence porteuse F2, destiné à sélectionner, en vue de former le deuxième signal de sortie S2, ladite composante à fréquence double.

La Fig.7 représente un émetteur TRM inclus dans un système de télécommunication selon une variante du mode de réalisation de l'invention particulièrement avantageux précédemment décrit, lequel émetteur TRM inclut un diviseur de fréquence DIV/2, constitué par exemple par deux bascules mémoire disposées en cascade, destiné à produire un premier signal de sortie S1 ayant une fréquence d'oscillation égale à la première fréquence porteuse F1, et un unique oscillateur local OSC, disposé en amont dudit diviseur de fréquence DIV/2, et destiné à produire un deuxième signal de sortie S2 ayant une fréquence d'oscillation égale à la deuxième fréquence porteuse F2. L'émetteur TRM inclut en outre un premier et un deuxième amplificateur A1 et A2, dont la fonction a déjà été décrite plus haut.
Cette variante permet également de n'utiliser qu'un seul oscillateur local OSC pour générer les première et deuxième fréquences porteuses F1 et F2.

## Revendications

1. Système de télécommunication incluant au moins un émetteur (TRM) et au moins un récepteur (REC) respectivement destinés à émettre et à recevoir des données transmises sur au moins une première et une deuxième fréquences porteuses (F1 et F2) associées à des premier et deuxième canaux de transmission, **caractérisé en ce qu'**il inclut des moyens (OCS1, OSC2, A1, A2) pour transmettre un même flux de données simultanément sur lesdites fréquences porteuses, les valeurs des première et deuxième fréquences porteuses étant telles qu'une valeur absolue d'une différence entre lesdites fréquences porteuses soit incluse dans une bande de fréquences définissant l'un des premier ou deuxième canaux de transmission.

2. Système de télécommunication selon la revendication 1, **caractérisé en ce que** l'émetteur (TRM) inclut un premier et un deuxième oscillateurs locaux (OSC1 et OSC2), destinés à produire des premier et deuxième signaux de sortie (S1 et S2) ayant respectivement des fréquences d'oscillation égales aux première et deuxième fréquences porteuses (F1 et F2).

3. Système de télécommunication selon la revendication 1, dans lequel la deuxième fréquence porteuse a une valeur nominale double de celle de la première fréquence porteuse.

4. Système de télécommunication selon la revendication 3, **caractérisé en ce que** l'émetteur (TRM) inclut un unique oscillateur local (OSC) destiné à produire un premier signal de sortie (S1) ayant une fréquence d'oscillation égale à la première fréquence porteuse (F1), et un multiplieur de fréquence (FMULT) destiné à produire, à partir du premier signal de sortie (S1), un deuxième signal de sortie (S2) ayant une fréquence d'oscillation égale à la deuxième fréquence porteuse (F2).

5. Système de télécommunication selon la revendication 4, **caractérisé en ce que** le multiplieur de fréquence (FMULT) inclut :
. un élément non-linéaire (NLA) destiné à produire, à partir du premier signal de sortie (S1), un signal intermédiaire présentant au moins une composante fondamentale ayant pour fréquence la première fréquence porteuse (F1), et au moins une composante harmonique ayant une fréquence double de celle de la composante fondamentale, et
. des moyens de filtrage du signal intermédiaire (FILT), destinés à sélectionner, en vue de former le deuxième signal de sortie, ladite composante harmonique.

6. Système de télécommunication selon la revendication 3, **caractérisé en ce que** l'émetteur (TRM) inclut un diviseur de fréquence (DIV/2), destiné à produire un premier signal de sortie (S1) ayant une fréquence d'oscillation égale à la première fréquence porteuse (F1), et un unique oscillateur local (OSC), disposé en amont dudit diviseur de fréquence (DIV/2), et destiné à produire un deuxième signal de sortie ayant une fréquence d'oscillation égale à la deuxième fréquence porteuse (F2).

7. Système de télécommunication selon l'une des revendications 2 à 6, **caractérisé en ce que** l'émetteur (TRM) inclut au moins une boucle à verrouillage de phase, destinée à réguler la fréquence d'oscillation d'au moins un signal de sortie d'au moins un oscillateur local.

8. Système de télécommunication selon l'une des revendications 2 à 7, **caractérisé en ce que** l'émetteur (TRM) inclut un premier et un deuxième amplificateur (A1 et A2), respectivement destinés à amplifier les premier et deuxième signaux de sortie (S1 et S2), lesdits amplificateurs (A1 et A2) présentant un gain ayant une valeur réglable au moyen d'un signal (DAT) contenant les données à transmettre.

9. Dispositif de communication par voie hertzienne destiné à émettre un même flux de données simultanément sur au moins une première et une deuxième fréquences porteuses (F1 et F2) respectivement associées à des premier et deuxième canaux de transmission, les valeurs des première et deuxième fréquences porteuses (F1 et F2) étant telles qu'une valeur absolue d'une différence entre lesdites fréquences porteuses soit incluse dans une bande de fréquences définissant l'un des premier ou deuxième canaux de transmission.

10. Dispositif de communication par voie hertzienne destiné à recevoir un même flux de données simultanément transmis sur au moins une première et une deuxième fréquences porteuses respectivement associées à des premier et deuxième canaux de transmission (F1 et F2), **caractérisé en ce que** ledit dispositif est adapté à recevoir un tel flux dont les valeurs des première et deuxième fréquences porteuses soient en outre telles qu'une valeur absolue d'une différence entre lesdites fréquences porteuses soit incluse dans une bande de fréquences définissant l'un des premier ou deuxième canaux de transmission.

11. Dispositif de communication selon l'une ou l'autre des revendications 9 ou 10, dans lequel la deuxième fréquence porteuse a une valeur nominale double de celle de la première fréquence porteuse.

12. Procédé de transmission de données incluant une étape d'émission simultanée desdites données sur au moins une première et une deuxième fréquence porteuse associées à des premier et deuxième canaux de transmission, les valeurs des première et deuxième fréquences porteuses étant telles qu'une valeur absolue d'une différence entre lesdites fréquences porteuses soit incluse dans une bande de fréquences définissant l'un des premier ou deuxième canaux de transmission.

13. Procédé de transmission de données selon la revendication 12, dans lequel la deuxième fréquence porteuse a une valeur nominale double de celle de la première fréquence porteuse.

## Claims

1. Telecommunications system comprising at least one transmitter (TRM) and at least one receiver (REC) intended respectively to transmit and receive data sent over at least a first and a second carrier frequency (F1 and F2) associated with first and second transmission channels, **characterised in that** it comprises means (OCS1, OSC2, A1, A2) for transmitting the same data flow simultaneously over said carrier frequencies, the values of the first and second carrier frequencies being such that an absolute value of a difference between said carrier frequencies is included in a band of frequencies defining one of the first or second transmission channels.

2. Telecommunications system according to claim 1, **characterised in that** the transmitter (TRM) comprises a first and a second local oscillator (OSC1 and OSC2), intended to produce first and second output signals (S1 and S2) having respective oscillation frequencies equal to the first and second carrier frequencies (F1 and F2).

3. Telecommunications system according to claim 1, wherein the second carrier frequency has a nominal value which is twice that of the first carrier frequency.

4. Telecommunications system according to claim 3, **characterised in that** the transmitter (TRM) comprises a single local oscillator (OSC) intended to produce a first output signal (S1) having an oscillation frequency equal to the first carrier frequency (F1), and a frequency multiplier (FMULT) intended to produce, from the first output signal (S1), a second output signal (S2) having an oscillation frequency equal to the second carrier frequency (F2).

5. Telecommunications system according to claim 4, **characterised in that** the frequency multiplier (FMULT) includes:
- a non-linear element (NLA) intended to produce, from the first output signal (S1), an intermediate signal having at least one fundamental component the frequency of which is the first carrier frequency (F1), and at least one harmonic component having a frequency that is twice that of the fundamental component, and
- means for filtering the intermediate signal (FILT), which are adapted to select said harmonic component in order to form the second output signal.

6. Telecommunications system according to claim 3, **characterised in that** the transmitter (TRM) comprises a frequency divider (DIV/2) adapted to produce a first output signal (S1) having an oscillation frequency equal to the first carrier frequency (F1), and a single local oscillator (OSC), arranged upstream of said frequency divider (DIV/2), and adapted to produce a second output signal having an oscillation frequency equal to the second carrier frequency (F2).

7. Telecommunications system according to one of claims 2 to 6, **characterised in that** the transmitter (TRM) comprises at least one phase locked loop adapted to regulate the oscillation frequency of at least one output signal of at least one local oscillator.

8. Telecommunications system according to one of claims 2 to 7, **characterised in that** the transmitter (TRM) comprises a first and a second amplifier (A1 and A2), intended respectively to amplify the first and second output signals (S1 and S2), said amplifiers (A1 and A2) having a gain with a value that can be regulated by means of a signal (DAT) containing the data to be transmitted.

9. Radio communications apparatus intended to transmit the same data flow simultaneously over at least a first and a second carrier frequency (F1 and F2) associated respectively with first and second transmission channels, the values of the first and second carrier frequencies (F1 and F2) being such that an absolute value of a difference between said carrier frequencies is included in a band of frequencies defining one of the first or second transmission channels.

10. Radio communications apparatus intended to receive the same data flow simultaneously transmitted over at least a first and a second carrier frequency associated respectively with first and second transmission channels (F1 and F2), **characterised in that** the apparatus is adapted to receive a flux wherein the values of the first and second carrier frequencies are also such that an absolute value of a difference between said carrier frequencies is included in a band of frequencies defining one of the first or second transmission channels.

11. Communication apparatus according to one or other of claims 9 or 10, wherein the second carrier frequency has a nominal value which is twice that of the first carrier frequency.

12. Data transmission process comprising a step of simultaneous transmission of said data over at least a first and a second carrier frequency associated with first and second transmission channels, the values of the first and second carrier frequencies being such that an absolute value of a difference between said carrier frequencies is included in a band of frequencies defining one of the first or second transmission channels.

13. Data transmission process according to claim 12, wherein the second carrier frequency has a nominal value which is twice that of the first carrier frequency.

## Patentansprüche

1. Telekommunlkationssystem, umfassend weinigstens einen Sender (TRM) und wenigstens einen Empfänger (REC), welche jeweils dazu bestimmt sind, Daten zu senden und zu empfangen, die auf wenigstens einer ersten und einer zweiten Trägerfrequenz (F1 und F2) übertragen werden, die einem ersten und zweiten Übertragungskanal zugeordnet sind, **dadurch gekennzeichnet, dass** es Mittel (OCS1, OCS2, A1, A2) zur simultanen Übertragung eines gleichen oder gleichartigen Datenstroms auf den genannten Trägerfrequenzen umfasst, wobei die Werte der ersten und zweiten Trägerfrequenz einem Absolutwert einer Differenz zwischen den genannten Trägerfrequenzen entsprechen, gegebenenfalls enthalten in einem Frequenzband, welches den ersten oder zweiten Übertragungskanal definiert.

2. Telekommunikationssystem nach Anspruch 1, **dadurch gekennzeichnet, dass** der Sender (TRM) einen ersten und zweiten lokalen Oszillator (OSC1 und OSC2) umfasst, welche dazu bestimmt sind, erste und zweite Ausgangssignal (S1 und S2) zu erzeugen, die jeweils Oszillationsfrequenzen besitzen, die der ersten und zweiten Trägerfrequenz (F1 und F2) entsprechen.

3. Telekommunikationssystem nach Anspruch 1, wobei die zweite Trägerfrequenz einen Nominalwert aufweist, der doppelt so hoch ist wie derjenige der ersten Trägerfrequenz.

4. Telekommunikationssystem nach Anspruch 3, **dadurch gekennzeichnet, dass** der Sender (TRM) einen einzigen lokalen Oszillator (OSC) umfasst, der dazu bestimmt ist, ein erstes Ausgangssignal (S1) zu erzeugen, welches eine Oszillationsfrequenz gleich der ersten Trägerfrequenz (F1) aufweist, und einen Frequenzmultiplikator (FMULT) umfasst, der dazu bestimmt ist, nach dem ersten Ausgangssignal (S1) ein zweites Ausgangssignal (S2) zu erzeugen, welches eine Oszillationsfrequenz gleich der zweiten Trägerfrequenz (F2) aufweist.

5. Telekommunikationssystem nach Anspruch 4, **dadurch gekennzeichnet, dass** der Frequenzmultiplikator (FMULT) enthält:
ein nicht-lineares Element (NLA), welches dazu bestimmt ist, nach dem ersten Ausgangssignal (S1) ein Zwischensignal zu erzeugen, das wenigstens eine Grundkomponente darstellt, die als Frequenz die erste Trägerfrequenz (F1) aufweist und
wenigstens eine harmonische Komponente mit einer Frequenz, die doppelt so hoch ist wie diejenige der Grundkomponente, und
Mittel zum Filtern des Zwischensignals (FILT), die dazu bestimmt sind, in Hinsicht auf die Bildung des zweiten Ausgangssignals die harmonische Komponente auszuwählen.

6. Telekommunikationssystem nach Anspruch 3, **dadurch gekennzeichnet, dass** der Sender (TRM) einen Frequenzteiler (DIV/2) umfasst, der dazu bestimmt ist, ein erstes Ausgangssignal (S1) zu erzeugen, welches eine Oszillationsfrequenz gleich der ersten Trägerfrequenz (F1) umfasst, und einen einzelnen lokalen Oszillator (OSC), der dem Frequenzteiler (DIV/2) vorgeschaltet ist und dazu bestimmt ist, ein zweites Ausgangssignal mit einer Oszillationsfrequenz gleich der zweiten Trägerfrequenz (F2) zu erzeugen.

7. Telekommunikationssystem nach einem der Ansprüche 2 bis 6, **dadurch gekennzeichnet, dass** der Sender (TRM) wenigstens eine Phasenverriegelungsschleife umfasst, die dazu bestimmt ist, die Oszillationsfrequenz wenigstens eines Ausgangssignals von wenigstens einem lokalen Oszillator zu regulieren oder zu regeln.

8. Telekommunikationssystem nach einem der Ansprüche 2 bis 7, **dadurch gekennzeichnet, dass** der Sender (TRM) einen ersten und zweiten Verstärker (A1 und A2) enthält, welche jeweils dazu bestimmt sind, die ersten und zweiten Ausgangssignale (S1 und S2) zu verstärken, wobei die Verstärker (A1 und A2) eine Leistung mit einem Wert aufweisen, der wenigstens von einem Signal (DAT) geregelt werden kann, welches übertragbare Daten enthält.

9. Vorrichtung zur Kommunikation über einen Funkkanal, die dazu bestimmt ist, simultan einen gleichen oder gleichartigen Datenstrom auf wenigstens einer ersten und zweite Trägerfrequenz (F1 und F2) auszusenden, welche jeweils einem ersten und zweiten Übertragungskanal zugeordnet sind, wobei die Werte der ersten und zweiten Trägerfrequenz (F1 und F2) einem Absolutwert einer Differenz zwischen den genannten Trägerfrequenzen entsprechen, gegebenenfalls enthalten in einem Frequenzband, welches einen der ersten oder zweiten Übertragungskanäle definiert.

10. Vorrichtung zur Kommunikation über einen Funkkanal, die dazu bestimmt ist, einen gleichen oder gleichartigen Datenstrom zu empfangen, welcher simultan auf wenigstens einer ersten und zweiten Trägerfrequenz übertragen wird, die jeweils einem ersten und zweiten Übertragungskanal (F1 und F2) zugeordnet ist, **dadurch gekennzeichnet, dass** die genannte Vorrichtung geeignet ist, einen Strom zu empfangen, dessen Werte der ersten und zweiten Trägerfrequenz weiterhin so beschaffen sind, dass ein Absolutwert einer Differenz zwischen den Trägerfrequenzen in einem Frequenzband enthalten ist, welches den ersten oder zweiten Übertragungskanal definiert.

11. Vorrichtung zur Kommunikation nach einem der Ansprüche 9 oder 10, bei der die zweite Trägerfrequenz einen Nominalwert aufweist, der doppelt so hoch ist wie derjenige der ersten Trägerfrequenz.

12. Datenübertragungsverfahren, umfassend einen Schritt zur simultanen Aussendung der Daten auf wenigstens einer ersten und zweiten Trägerfrequenz, welche einem ersten und zweiten Übertragungskanal zugeordnet sind, wobei die Werte der ersten und zweiten Trägerfrequenz einem Absolutwert einer Differenz zwischen den Trägerfrequenzen entsprechen, gegebenenfalls enthalten in einem Frequenzband, welches den ersten oder zweiten Übertragungskanal definiert.

13. Datenübertragungsverfahren nach Anspruch 12, bei dem die zweite Trägerfrequenz einen Nominalwert besitzt, der doppelt so hoch ist wie derjenige der ersten Trägerfrequenz.
